# DEMANDE DE BREVET EUROPEEN

(11) **EP 3 632 254 A1**
(43) Date de publication de la demande: **08.04.2020**
(21) Numéro de dépôt: 18198451.9
(22) Date de dépôt: 03.10.2018
(51) Int. Cl.: A44C 5/00

(54) **BRACELET PLASTIQUE AVEC UNE RUGOSITE REDUITE**

(71) Demandeur: The Swatch Group Research and Development Ltd, 2074 Marin (CH)
(72) Inventeur: RANNOUX, Claire, 1110 Morges (CH); POINSOT, Blaise, 2000 Neuchâtel (CH); FRANCOIS, Nicolas, 2000 Neuchâtel (CH)
(74) Mandataire: ICB SA

(57) **Abrégé**

L'invention concerne un procédé de fabrication d'un bracelet (5) en matériau synthétique pour montre (6) ou bijou comportant au moins un brin (5a), le procédé comprenant une étape de réalisation par moulage ou extrusion d'une bande (1) en matériau synthétique destinée à former ledit au moins brin (5a), le procédé étant caractérisé en ce qu'il comporte ensuite une étape de polissage en masse de ladite bande (1) réduisant la rugosité de surface dudit au moins brin à une rugosité Rp inférieure ou égale à 3 µm. L'invention concerne également un bracelet en matériau synthétique pour montre (6) ou bijou comportant au moins un brin (5a) formé d'une bande (1) extrudée ou moulée et ensuite polie en masse, caractérisé en ce que ledit au moins brin (5a) a une rugosité Rp inférieure ou égale à 3 µm, et, de préférence, inférieure ou égale à 2 µm.

## Description

### Domaine technique

La présente invention se rapporte à un procédé de fabrication par extrusion ou moulage d'un bracelet de montre ou de bijou présentant à l'issue de son procédé de fabrication une finition esthétique parfaite.

### Art antérieur

A ce jour, les bracelets de montre en plastique sont essentiellement fabriqués par moulage, soit par injection, soit par compression. Ces procédés permettent la fabrication rapide de grandes séries de ce type d'objets en matière plastique avec des formes complexes et un état de surface contrôlé. Cependant, les bracelets fabriqués par moulage présentent sur toute la longueur de la tranche du bracelet une ligne d'injection qui constitue un défaut peu esthétique. D'autre part, le procédé de moulage nécessite un outillage coûteux, d'autant plus coûteux que l'objet est complexe. Par ailleurs, si on souhaite obtenir des bracelets avec différentes couleurs ou matières dans la masse, il est nécessaire d'avoir recours à plusieurs étapes de surmoulage ou de bi-injection.

Il a également été proposé dans les documents FR 2 121 864 et WO 2017/118499 de réaliser des bracelets par un procédé d'extrusion qui est un procédé moins onéreux pour les fabrications de grandes séries de pièces. En particulier, le document WO 2017/118499 divulgue un procédé de co-extrusion de matériaux de couleurs et/ou de propriétés différentes pour réaliser des bracelets aux géométries et aux propriétés plus élaborées. Le procédé d'extrusion a cependant pour désavantage qu'il génère sur la face de la bande extrudée des défauts dus au passage et aux frottements de la matière à travers la filière. Ces défauts sont visibles à l'oeil nu, peu agréables au toucher et facilitent l'accroche de la salissure à cause de la rugosité de surface. Par ailleurs, la découpe de la bande extrudée pour former les brins du bracelet conduit à des arêtes franches non arrondies et peu esthétiques. En conséquence, d'un point de vue pratique, l'utilisation de ce procédé est généralement limitée à la fabrication d'objets pour lesquels les critères esthétiques sont peu élevés comme, par exemple, des colliers pour chiens ou des bracelets temporaires dans le cadre hospitalier.

### Résumé de l'invention

La présente invention a pour objet de remédier aux inconvénients précités en proposant un procédé de fabrication de bracelets incluant, après une étape d'extrusion plus découpe, ou de moulage, une étape de polissage en masse des brins du bracelet permettant de réduire la rugosité de surface et, par là-même, d'obtenir une finition esthétique parfaite.

Le polissage en masse, aussi connu sous les termes de polissage mécano-chimique, tribofinition ou finition de masse, permet d'obtenir une surface très agréable au toucher (effet ultra soft), supprimant également l'effet collant de certaines matières après extrusion ou injection. Il permet également de gommer les défauts de surface dus aux frottements de la filière d'extrusion sur la matière ou aux lignes d'injection. Il permet également d'obtenir un matériau avec une meilleure résistance à la salissure. En effet, la modification de la surface évite aux salissures de s'accrocher dans le matériau : la résistance à la salissure est améliorée et l'élimination de la salissure par lavage est facilitée. L'étape de polissage permet également d'arrondir les tranches du bracelet, après découpe ou après moulage, ce qui améliore également l'aspect esthétique du bracelet.

Concrètement, le polissage en masse permet de matifier la surface de la matière et donc d'homogénéiser le profil de rugosité. Le bracelet issu du procédé présente ainsi pour caractéristique d'avoir une rugosité moyenne Rp inférieure ou égale à 3 µm, et, de préférence, inférieure ou égale à 2 µm.

D'autres caractéristiques et avantages de la présente invention apparaîtront dans la description suivante de modes de réalisation préférés, présentés à titre d'exemple non limitatif en référence aux dessins annexés.

### Brève description des figures

La figure 1 représente une vue schématique de deux bandes de géométries différentes, issues de la ligne d'extrusion selon le procédé de l'invention.
La figure 2 représente une vue en perspective d'une montre munie d'une variante de bracelet fabriqué avec le procédé selon l'invention.
Les figures 3 et 4 représentent des vues en plan de montres munies respectivement d'autres variantes du bracelet fabriqué avec le procédé selon l'invention.

### Description détaillée

La présente invention se rapporte à un procédé de fabrication d'un bracelet de montre ou de bijou en matière synthétique ainsi qu'au bracelet issu du procédé. De manière conventionnelle, le bracelet comporte un ou deux brins avec, par exemple, un seul brin dans le cas d'une construction type NATO. Le procédé de fabrication inclut une étape de polissage en masse. En amont de cette étape, une bande destinée à former un ou deux brins du bracelet est réalisée. Préférentiellement, la bande synthétique est réalisée par extrusion qui est un procédé pour lequel l'état de surface est difficile à contrôler. Cependant, la présente invention n'exclut pas de réaliser la bande par moulage. Le procédé comporte ainsi successivement une étape de réalisation par moulage ou extrusion d'une bande en matériau synthétique destinée à former un ou deux brins du bracelet et une étape de polissage en masse de chaque brin. Dans le cas d'une étape de réalisation par moulage, la bande issue de cette étape présente des dimensions correspondantes à celles du brin. Dans le cas d'une étape de réalisation par extrusion, la bande issue de cette étape est découpée à dimension pour obtenir le ou les brins du bracelet. Ainsi, pour cette dernière variante préférée, le procédé de fabrication comporte successivement :
1. une étape d'extrusion d'au moins une matière synthétique pour former une bande extrudée,
2. une étape de découpe de la bande extrudée pour obtenir le ou les brins du bracelet,
3. une étape de polissage en masse de chaque brin.

L'étape d'extrusion du procédé consiste à fabriquer une bande ayant une largeur correspondant sensiblement à la largeur du bracelet ou ayant une largeur correspondant sensiblement à la longueur d'un brin ou des deux brins du bracelet.

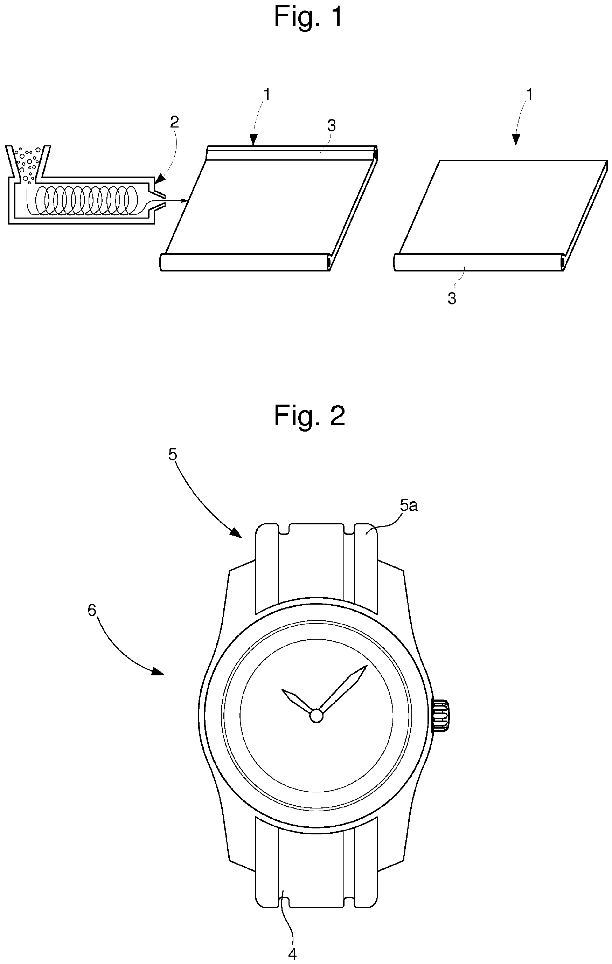

La bande issue du moulage ou de l'extrusion peut présenter un relief. Elle peut également comporter des zones se distinguant par leur couleur et/ou leurs propriétés du reste de la bande. A titre d'exemple à la figure 1 pour une bande extrudée, la bande 1 a une largeur en sortie de la filière 2 correspondant à la longueur d'un brin avec à une ou chacune des extrémités latérales une structure tubulaire creuse en saillie 3 formant un trou débouchant destiné à recevoir une barrette permettant la fixation à une boîte de montre. A titre d'autre exemple illustré à la figure 2, la bande extrudée peut avoir une largeur en sortie de filière correspondant sensiblement à la largeur d'un brin 5a et comporter des rainures 4 s'étendant sur toute la longueur du bracelet 5 de la montre 6.

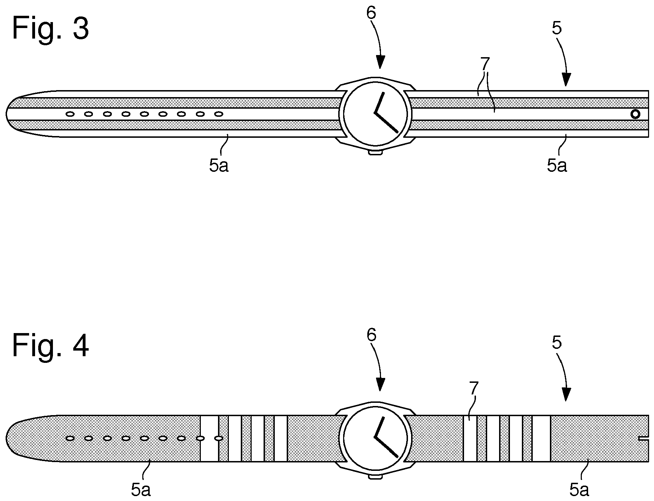

Pour obtenir différentes couleurs et/ou propriétés sur la bande, l'étape d'extrusion peut consister en une étape de co-extrusion de plusieurs matières. La bande extrudée peut ainsi présenter des bandes de couleurs 7 qui s'étendent sur le bracelet 5 longitudinalement ou transversalement selon respectivement que la bande extrudée a une largeur correspondant à la largeur du brin (fig.3) ou à la longueur du brin (fig.4).

Selon l'invention, les matériaux synthétiques utilisés sont des mélanges comprenant au moins un polymère élastomère avec une dureté comprise entre 55 et 90 shore A et, de préférence, entre 60 et 75 shore A choisi parmi un élastomère thermoplastique (TPE), un silicone et un caoutchouc naturel ou synthétique. Préférentiellement, le mélange comprend au moins un TPE choisi parmi la liste suivante :
- TPE-O - Oléfines thermoplastiques
- TPE-S - Plus particulièrement les composés SBS, SEBS ou SEPS styréniques
- TPE-V - Plus particulièrement les composés PP/EPDM vulcanisés ou TPSi-V (combinaison de thermoplastique et de silicone réticulé)
- TPE-E - Composé de copolyester
- TPE-U - Polyuréthane thermoplastique
- TPE-A - Polyamide thermoplastique
- Résines ionomères.

L'étape de découpe de la bande extrudée pour former les brins du bracelet peut être réalisée par découpe mécanique (étampage et/ou système de lames), jet d'eau, laser ou ultrason. Il est aussi possible de refroidir la bande avant l'opération de découpe, afin d'avoir des propriétés mécaniques plus adéquates au procédé choisi, et limiter les bavures, par exemple.

L'étape de polissage en masse consiste à immerger les brins dans un mélange abrasif mis en mouvement dans la cuve d'une polisseuse qui peut être de type vibreur ou à fond tournant. A titre d'exemple, le polissage est réalisé dans une polisseuse à fond tournant, aussi dite centrifugeuse à fond tournant, avec une vitesse de rotation comprise entre 100 et 400 t/min et, de préférence, entre 200 et 300 t/min avec des temps de traitement compris entre 1 et 5 heures et, de préférence, entre 2 et 4 heures. Le mélange abrasif comporte des porteurs pouvant être de différentes formes (triangulaires, cylindriques, etc.) et réalisés dans différents matériaux tels qu'en céramique, en métal, en matière organique, comme du maïs ou des coquilles broyées, ou en polymère, avec un pouvoir abrasif ajusté en fonction de l'aspect final désiré et de la matière des brins. Le mélange peut en outre comporter un additif chimique tel que du savon et/ou un additif abrasif sous forme de poudre ou de pâte destiné à amplifier l'effet abrasif. L'étape de polissage en masse permet de matifier l'ensemble de la surface des brins du bracelet, c.à.d. en d'autres mots d'homogénéiser la hauteur des sommets. Selon l'invention, la valeur Rp qui est la hauteur maximum des saillies du profil de rugosité mesurée selon les normes ISO 4287 :1997 et ISO 4288:1996 est inférieure ou égale à 3 µm et, de préférence, inférieure ou égale à 2 µm. La hauteur maximum des saillies est déterminée pour chaque longueur de base analysée et moyennée sur toutes les longueurs de base pour obtenir la valeur susmentionnée. L'étape de polissage permet aussi de supprimer les éventuels défauts liés au procédé de mise en forme (trace d'extrusion, par exemple) ou de découpe (bavures résiduelles, bords trop francs, etc...).

Un exemple de fabrication selon l'invention est donné ci-après. Deux composés en TPE-S de couleurs distinctes sont co-extrudés à travers une filière tridimensionnelle comportant à une extrémité latérale un profil tubulaire. La bande extrudée issue de la filière présente une géométrie semblable à celle de la bande à droite de la figure 1. La bande extrudée a été découpée par étampage pour obtenir un brin de bracelet avec des arêtes franches. Ensuite, le brin de bracelet a été poli dans une centrifugeuse à fond tournant pendant 3 heures avec des porteurs céramiques de forme triangulaire ayant un pouvoir abrasif moyen, d'une hauteur et d'une largeur de respectivement 8 mm (Spaleck Oberflächentech B8*8D) et un additif chimique type savon (Spaleck Oberflächentech nik D-670-U) à une vitesse de 260 t/min.

La rugosité du brin de bracelet avant et après polissage a été analysée avec un profilomètre optique Altisurf 500 (ISO 4288 :1996/4287 :1997) sur une surface de 3 mm * 3 mm à une vitesse de mesure de 250 µm/s, à raison d'une mesure par 1 µm. Les valeurs données ci-dessous ont été réalisées sur trente longueurs de base de 0.8 mm et sont la moyenne des valeurs obtenues pour chaque longueur de base. Avant polissage, la surface présente une rugosité Rp de 3.4 µm. Après polissage, la rugosité Rp est réduite à une valeur de 1.9 µm.

La résistance à la salissure a été évaluée par frottements (1000 cycles) d'un vêtement en jean sur les brins de bracelets avant et après polissage. Le dégorgement du jean sur le bracelet a été observé avant et après lavage. Il est constaté que le polissage permet de réduire drastiquement la formation de salissure sur le bracelet et qu'il permet en outre de faciliter le lavage.

### Légende des figures

(1) Bande
(2) Filière de la ligne d'extrusion
(3) Structure tubulaire creuse
(4) Rainure
(5) Bracelet
   a. Brin
(6) Montre
(7) Bande de couleur

## Revendications

1. Procédé de fabrication d'un bracelet (5) en matériau synthétique pour montre (6) ou bijou comportant au moins un brin (5a), le procédé comprenant une étape de réalisation par moulage ou extrusion d'une bande (1) en matériau synthétique destinée à former ledit au moins brin (5a), le procédé étant **caractérisé en ce qu'**il comporte ensuite une étape de polissage en masse de ladite bande (1).

2. Procédé selon la revendication 1, **caractérisé en ce que** l'étape de réalisation de la bande (1) est effectuée par extrusion et suivie d'une étape de découpe de ladite bande (1) pour former ledit au moins brin (5a) avant l'étape de polissage en masse.

3. Procédé selon la revendication 1 ou 2, **caractérisé en ce que** l'étape de polissage en masse est effectuée dans une polisseuse à fond tournant ou de type vibreur.

4. Procédé selon l'une quelconque des revendications précédentes, **caractérisé en ce que** l'étape de polissage en masse est effectuée dans une polisseuse à fond tournant avec une vitesse de rotation comprise entre 100 et 400 t/min et, de préférence, entre 200 et 300 t/min et avec un temps de traitement compris entre 1 et 5 heures et, de préférence, entre 2 et 4 heures.

5. Procédé selon l'une quelconque des revendications précédentes, **caractérisé en ce que** l'étape de polissage en masse est effectuée dans un mélange abrasif comprenant des porteurs en céramique, en métal, en matière organique ou en polymère et, de préférence, comprenant des porteurs en céramique.

6. Procédé selon l'une quelconque des revendications précédentes, **caractérisé en ce que** la bande (1) issue de l'étape d'extrusion ou de moulage comporte des zones en relief et/ou des zones formées de matières se distinguant par leurs couleurs et/ou leurs propriétés.

7. Procédé selon l'une quelconque des revendications précédentes, **caractérisé en ce que** la bande (1) issue de l'étape d'extrusion a une largeur correspondant sensiblement à la largeur dudit au moins brin (5a).

8. Procédé selon l'une quelconque des revendications 1 à 6, **caractérisé en ce que** la bande (1) issue de l'étape d'extrusion a une largeur correspondant sensiblement à la longueur dudit au moins brin (5a).

9. Bracelet (5) en matériau synthétique pour montre (6) ou bijou comportant au moins un brin (5a) formé d'une bande (1) extrudée ou moulée, **caractérisé en ce que** ledit au moins brin (5a) a une rugosité Rp inférieure ou égale à 3 µm.

10. Bracelet (5) selon la revendication 9, **caractérisé en ce que** ledit au moins brin (5a) a une rugosité Rp inférieure ou égale à 2 µm.

11. Bracelet (5) selon la revendication 9 ou 10, **caractérisé en ce que** le matériau synthétique comprend au moins un polymère élastomère avec une dureté comprise entre 55 et 90 shore A et, de préférence, entre 60 et 75 shore A, ledit polymère élastomère étant choisi parmi un élastomère thermoplastique (TPE), un silicone et un caoutchouc naturel ou synthétique.

12. Bracelet (5) selon l'une quelconque des revendications 9 à 11, **caractérisé en ce que** ledit au moins un brin (5a) comporte une zone en relief et/ou une zone se distinguant du reste dudit au moins brin (5a) par sa couleur et/ou ses propriétés.

13. Bracelet (5) selon l'une quelconque des revendications 9 à 12, **caractérisé en ce que** ledit au moins un brin (5a) est formée d'une bande (1) extrudée présentant des tranches arrondies.

14. Montre (6) ou bijou comprenant le bracelet (5) selon l'une quelconque des revendications 9 à 13.
